# FASCICULE DE BREVET EUROPEEN

(11) **EP 2 091 872 B1**
(45) Date de publication et mention de la délivrance du brevet: **03.04.2019**
(21) Numéro de dépôt: 07870396.4
(22) Date de dépôt: 14.12.2007
(51) Int. Cl.: C03B 5/235

(54) **PROCÉDÉ DE COMBUSTION POUR LA FUSION DE VERRE**
VERBRENNUNGSVERFAHREN ZUM GLASSCHMELZEN
COMBUSTION METHOD FOR GLASS MELTING

(30) Priorité: 15.12.2006 FR 0655571
(43) Date de publication de la demande: 26.08.2009
(60) Demande divisionnaire: 17174799.1
(73) Titulaire: Engie, 92400 Courbevoie (FR)
(72) Inventeur: WARD, John, décedé (GB); FRICKER, Neil, Solihull B93 8BT (GB); PONT, Richard Stanley, Edinburgh EH1 1SR (GB); FERLIN, Thierry, décédé (FR); MAUREL, Stéphane, 75014 Paris (FR)
(74) Mandataire: Thinat, Michel
(86) Numéro de dépôt international: PCT/FR2007/052518
(87) Numéro de publication internationale: WO 2008/074961

(56) Documents cités:
- EP-A2- 0 882 488
- JP-A- 5 180 409
- JP-A- 8 208 240
- US-A- 4 496 306
- US-A- 4 599 100

## Description

La présente invention concerne un procédé de combustion pour la fusion de verre. L'invention peut être appliquée aussi à d'autres types de fours à haute température.

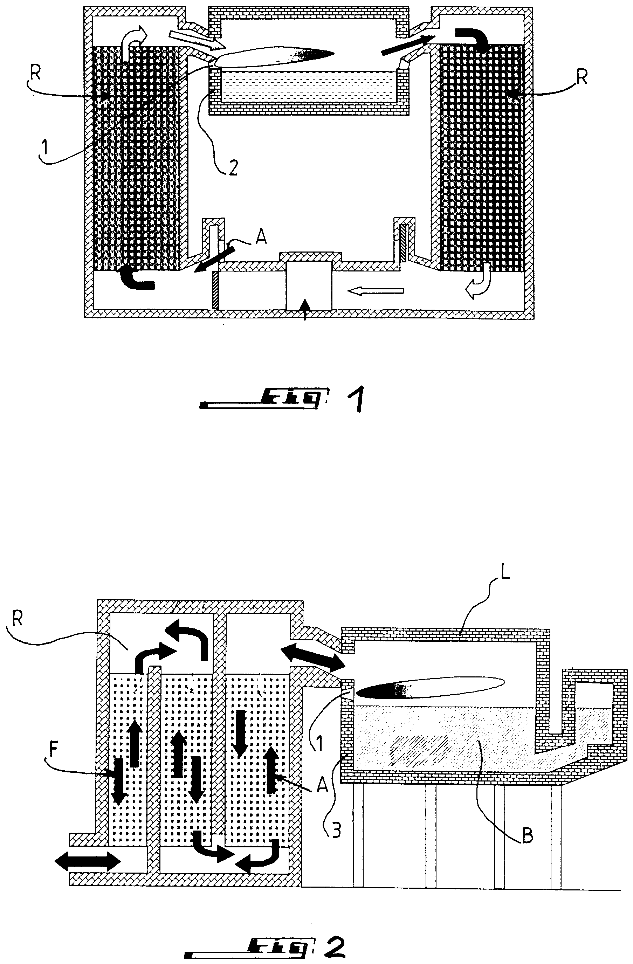

La plupart des types de verre, et en particulier le verre plat ou le verre d'emballage, sont fabriqués par fusion de matériaux bruts dans de grands fours de fusion produisant de quelques dizaines à quelques centaines de tonnes de verre par jour et par unité. Le combustible utilisé au sein de tels fours est généralement le gaz naturel ou le fuel lourd, bien que d'autres combustibles puissent également être utilisés. Certains fours utilisent aussi l'électricité pour augmenter la production (boosting électrique). Des fours à hautes températures (typiquement 1500°C, mais parfois au-delà) sont nécessaires à la fusion. Des conditions optimales de température de four sont obtenues en préchauffant l'air de combustion (typiquement jusqu'à 1000 °C, mais parfois au-delà). La chaleur requise pour préchauffer l'air de combustion est transmise par les fumées, ce qui se fait généralement en utilisant des régénérateurs réversibles. Cette approche permet d'obtenir une forte efficacité thermique combinée à de hauts taux de fusion. II existe plusieurs types de fours de fusion dont :
- Les fours à brûleurs transversaux : dans ces fours, qui ont une surface de fusion généralement supérieure à 70 m² et fonctionnent avec une inversion du sens de la flamme toutes les 20 à 30 minutes environ, la chaleur contenue dans les fumées est récupérée dans des régénérateurs constitués d'empilages de briques réfractaires. L'air froid de combustion est préchauffé lors de son passage dans les régénérateurs (montée d'air), tandis que les fumées chaudes sortant du four sont utilisées pour réchauffer d'autres régénérateurs (descente des fumées). Ces fours d'une tirée parfois supérieure à 600 t/j et utilisés pour la fabrication du verre plat et du verre pour emballages sont de gros consommateurs d'énergie. Le schéma de fonctionnement d'un four transversal est présent sur la figure 1.

- Les fours à boucle : dans ces fours, la flamme (parfois appelée flamme en fer à cheval) décrit une boucle. Ces fours fonctionnent avec une récupération de la chaleur des fumées par des empilages constituant des régénérateurs qui la restituent à l'air de combustion. Le schéma de fonctionnement d'un four de ce type est présenté sur la figure 2.

Le combustible est injecté au sein du four dans ou près de la veine d'air quittant le régénérateur. Les brûleurs sont conçus pour produire des flammes à hautes températures avec de bonnes qualités radiatives pour avoir un transfert thermique efficace. Un certain nombre d'options existent pour réaliser le mélange comburant/combustible. Les noms de ces techniques renseignent sur la façon dont est introduit le combustible. Les configurations les plus fréquemment rencontrées sont les suivantes :
- « Under port » : sous la veine d'air,
- « Over port » : au dessus de la veine d'air,
- « Side port » : à côté de la veine d'air,
- « Through port » : au travers de la veine d'air.

Le choix entre ces différents modes d'injection est fait de façon à obtenir un résultat approprié pour la configuration des veines d'air et du type de four de fusion utilisé, ainsi qu'en fonction de contraintes liées à l'approvisionnement en combustible (ex : pression gaz disponible sur un four alimenté en gaz naturel) ou encore à la nature du combustible.

Bien que de telles méthodes de combustion soient très efficaces en termes de conduite de four, elles induisent des effets indésirables tels que la production de très hauts niveaux d'oxydes d'azotes (appelés par la suite : NOx), un des polluants de l'air les plus réglementés. Dans la plupart des pays industrialisés, des limites (en concentration et en flux) sont imposées sur les fours verriers de grandes capacités afin de réduire les émissions de NOx. De plus, la réglementation devient plus drastique chaque année.

Dans les fours à haute température comme dans les fours de fusion de verre, la voie principale de formation des NOx est la voie « thermique » où les NOx sont produits dans des zones du four où les températures de flamme sont supérieures à 1600 °C. Au delà de ce seuil, la formation des NOx augmente de façon exponentielle avec la température de flamme. Malheureusement, les techniques de combustion généralement utilisées dans les fours de fusion pour créer des flammes très radiatives comme celles citées précédemment induisent de fortes températures de flamme (avec des maxima supérieurs à 2000 °C) et ont pour conséquences de générer des émissions de NOx bien supérieures à celles admises dans de nombreux pays du monde.

En outre, l'une des conséquences des modes de combustion conventionnels est qu'il y a peu de chaleur dégagée par la combustion dans la plupart du volume du four, puisqu'en effet, les produits de combustion entourant la flamme se refroidissent progressivement en cédant leur chaleur au bain de verre.

Au cours du temps, les fumées deviennent moins efficaces pour transférer de la chaleur par rayonnement au bain de verre. II est possible d'accroître, dans des proportions significatives, le transfert de chaleur par rayonnement de la flamme au bain de verre si l'on trouve le moyen d'augmenter la température des produits de combustion encore présents dans le laboratoire de fusion.

II existe plusieurs techniques permettant de réduire les émissions de NOx sur les fours de fusion régénératifs. On distingue les méthodes primaires (où la réduction se fait pendant la combustion), des méthodes secondaires (où la réduction se fait par traitement des produits de combustion en sortie du four) et des méthodes intermédiaires où le traitement se fait en sortie du laboratoire de fusion au niveau des régénérateurs (Procédé 3R de Pilkington ou encore reburning).

Les méthodes qui peuvent être utilisées sont les suivantes :
- Méthode primaire - Brûleurs « bas-NOx » : Il existe plusieurs types de brûleurs « bas-NOx », c'est-à-dire des brûleurs permettant, même utilisés seuls, de réduire les émissions de NOx, sur le marché. Toutefois, leurs performances ne permettent pas toujours d'atteindre les niveaux de réduction nécessaires au respect des réglementations européennes, ou en vigueur dans d'autres pays du monde. On rencontre plus particulièrement les types de brûleurs suivants :
   ∘ Brûleurs à double impulsion - Ces brûleurs produisent une faible vitesse de gaz à la racine de la flamme de façon à réduire la température de flamme dans la zone où la majorité des NOx est générée. Ces brûleurs augmentent aussi la luminosité de la flamme, ce qui favorise une baisse de température du front de flamme par augmentation du transfert radiatif de chaleur au bain de verre.
   ∘ Injection de gaz enveloppante ou « Shrouded Gas injection » - Avec cette technique, du combustible gazeux est injecté à faible vitesse au dessus des brûleurs «underport» afin de bloquer les écoulements comburants/oxydant et de retarder le mélange du gaz à forte vitesse issu des brûleurs «underport» avec les jets d'air réduisant ainsi les températures en racine de flamme.
   ∘ Ultra-faible vitesse d'injection du gaz - Des injections de gaz combustible à très faibles vitesses (inférieures à 30 m/s) sont utilisées avec des brûleurs spéciaux refroidis par circulation d'eau afin de minimiser la température locale de la flamme et d'augmenter sa luminosité. L'efficacité de ce type de brûleurs en termes de réduction de NOx dépend beaucoup du design du four.

Methode primaire - Etagement : Cette technique utilise les brûleurs conventionnels pour l'injection du combustible et la réduction du débit d'air de combustion au travers de la veine d'air pour se placer en conditions d'excès de combustible et introduire le reste du comburant dans un autre endroit du four pour compléter l'oxydation du combustible. Cette méthode capable de réduire drastiquement les émissions de NOx est cependant difficile a implémenter et coûteuse à mettre en oeuvre car elle nécessite de l'oxygène pur ou des conduits d'amenée d'air à plus de 1000° C pour être efficaces thermiquement (l'étagement du comburant en air froid induirait une diminution d'efficacité énergétique). Des exemples de cette technique d'étagement sont :
- L'étagement de l'air : Détournement de l'air de combustion chaud issu des régénérateurs en utilisant un éjecteur vers la chambre de combustion en direction des fumées de façon à réaliser une combustion complète. Cette méthode nécessite l'utilisation de conduits calorifugés et d'air froid pour diriger l'éjecteur d'où une perte d'efficacité thermique. Cette technique a seulement été utilisée sur des fours à boucle et principalement en Allemagne.
- L'étagement de l'air enrichi en oxygène ou OEAS (pour Oxygen Enriched Air Staging) : L'air de combustion entrant dans la veine d'air est admis avec un débit insuffisant pour une combustion complète afin de créer des conditions sous-stoechiométriques, et de l'oxygène pur ou de l'air enrichi en oxygène est injecté a l'arrière du four vers l'écoulement des fumées de façon à compléter la combustion dans la zone de recirculation du four. Les injecteurs OEAS sont généralement installés en position underport de façon séparée des brûleurs. Cette technique a été appliquée avec succès aux fours à boucle et aux fours transversaux et ce principalement aux Etats-Unis.

Parmi les différentes technologies d'étagement, le brevet WO 97/36134 divulgue un dispositif de brûleurs en ligne. Ce dispositif permet d'étager le combustible au sein de la veine d'air. Le combustible fourni au four est divisé en deux, et une partie est injectée en amont du brûleur directement dans l'air de combustion chaud. Cette méthodologie n'utilise pas une injection de combustible directement dans la chambre de combustion comme dans la présente invention. La technique utilise une injection de combustible mais toujours couplée avec une injection d'air.
- Methode primaire - Régime de fonctionnement riche :
   Cette technique réduit les émissions de NOx en injectant du combustible supplémentaire dans la chambre de combustion de façon à créer une « atmosphère réductrice » dans la chambre de combustion. L'atmosphère réductrice convertit les NOx formés dans la flamme en azote et en oxygène. Dans cette technique, les NOx produits dans le front de flamme à haute température sont réduits dans un second temps.

En effet, comme le montre par exemple le document JP-A-08208240, un combustible supplémentaire introduit par des injecteurs situés sur la paroi supportant le brûleur, sur une paroi latérale ou en face du brûleur s'ajoute au combustible d'origine alimentant le ou les brûleur(s). Cependant, selon cette méthode, tout en permettant de réaliser d'importantes réductions de NOx dans la chambre de combustion, il est nécessaire de fournir de l'air de combustion supplémentaire après la sortie de la chambre de combustion. Cette méthode requiert non seulement une consommation supplémentaire de combustible, mais le combustible supplémentaire n'est pas brûlé dans la chambre de combustion et ne participe donc pas à la fonte du verre.

Ce procédé utilise une surconsommation de combustible pour réduire les NOx et son application peut mener à une augmentation des températures dans les régénérateurs, et à terme à la dégradation des régénérateurs.
- Méthode secondaire - Traitement des fumées : Les NOx sont en majeure partie traités en sortie de four par utilisation de procédés de réductions chimiques. De tels procédés nécessitent l'utilisation d'agents réducteurs tels que l'ammoniaque ou des résidus de combustion hydrocarbonés avec ou sans présence de catalyseurs. Bien que capable d'atteindre les réductions des niveaux de NOx fixés par la réglementation, ces procédés sont très chers à installer et à exploiter, et dans le cas des procédés basés sur les hydrocarbures comme le procédé ou système 3R expliqué ci-après, on constate une augmentation de 5 à 15% de la consommation du combustible. Des exemples de cette technique sont donnes ci-dessous :
   ∘ Procede 3R (Reaction and Reduction in Regenerators ; Procédé breveté de la société PILKINGTON)
- Dans cette technique, le gaz est injecté en cerveau de chambre de façon à consommer tout excès d'air et à produire des conditions de réduction dans les régénérateurs situés en sortie de four aboutissant à la conversion des NOx en azote et en eau. Comme un excès de gaz doit être utilisé, celui-ci est consommé dans le bas des régénérateurs où l'air est infiltré ou injecté. La chaleur supplémentaire générée est souvent récupérée par des chaudières. Pour minimiser la quantité de gaz nécessaire au système 3R, il est courant d'opérer sur le four avec l'excès d'air le plus faible possible. Cette technologie permet d'atteindre les niveaux de réduction de NOx imposés par la réglementation actuelle et même d'aller au delà. Généralement, 5 à 15 % de la consommation totale en combustible du four est nécessaire à la mise en oeuvre du procédé 3R. L'atmosphère réductrice dans les régénérateurs est souvent la cause de problèmes avec les réfractaires qui les composent.
   ∘ Reduction catalytique selective ou SCR (Selective Catalytic Réduction) - Cette méthode utilise un catalyseur en platine pour faire réagir les NOx avec de l'ammoniaque ou de l'urée de façon à réduire les NOx en N2 et en eau. Le processus doit avoir lieu à une température spécifique et nécessite un contrôle précis de l'ammoniaque pour éviter des dégagements accidentels générant de la pollution. Comme cette réaction se fait en surface, de larges surfaces de catalyseur sont nécessaires impliquant des équipements relativement grands. Le procédé chimique est relativement complexe et exigeant en termes de contrôle/commande et de maintenance. De très forts niveaux de réduction de NOx sont atteints, cependant la contamination des catalyseurs par les fumées chargées en particules issues du four de fusion de verre pose des problèmes de colmatage et de corrosion. Au bout d'un certain temps, les catalyseurs doivent être remplacés au prix de dépenses considérables.

Le document JP A 08208240 décrit un four pour fusion de verre. Le document EP 0 882 488 A2 décrit un four de fusion de verre à réduction des émissions de NOx. Le document US 4 599 100 décrit une méthode de réduction des quantités d'émission de NOx d'un four de fusion de verre.

Le but de l'invention est ainsi de proposer un procédé qui permet de remédier à l'ensemble des inconvénients énoncés ci-dessus.

Plus particulièrement, l'invention doit permettre de réduire les émissions de NOx tout en augmentant les températures des fumées environnantes au sein du four (les émissions de NOx produit dans ces zones sont très faibles) De plus, l'invention doit permettre de maintenir, voire d'augmenter, le transfert de chaleur au bain de verre ainsi que le rendement du four.

L'invention est définie dans les revendications 1 à 7. Le but de l'invention est atteint avec un procédé de combustion pour la fusion de verre selon lequel deux combustibles, de même nature ou de natures différentes, sont introduits dans un laboratoire de fusion à deux endroits éloignés l'un de l'autre pour répartir le combustible dans le laboratoire de fusion en vue de limiter les émissions de NOx, l'alimentation en air de combustion se faisant à l'un des deux endroits seulement.

Le but de l'invention est également atteint avec la mise en oeuvre d'un four de fusion de verre, comprenant un bassin pour recevoir le verre à fondre et contenir le bain de verre fondu avec, au dessus du verre, des parois formant respectivement une paroi avant, une paroi arrière, des parois latérales et une voûte et constituant un laboratoire de fusion, également appelé chambre de combustion, ainsi qu'au moins une entrée d'air de combustion chaud (l'entrée d'air de combustion étant également appelée « veine d'air »), par exemple en sortie d'un régénérateur, au moins une sortie de fumées chaudes et au moins un brûleur pour introduire un premier combustible dans le laboratoire de fusion.

Selon l'invention, le four de fusion mis en oeuvre comprend en outre au moins un injecteur pour injecter un second combustible dans une zone du laboratoire de fusion qui est éloignée du brûleur et située entre la voûte et un plan horizontal situé à un niveau supérieur ou égal à un plan horizontal passant par un bord inférieur de l'entrée d'air de combustion chaud, l'injecteur étant réglable en débit de manière complémentaire par rapport au brûleur afin de pouvoir injecter jusqu'à 100 % de la totalité des premier et second combustibles utilisés par l'injecteur et le brûleur, que le premier et le second combustibles soient de même nature ou de natures différentes. Avantageusement, ledit plan horizontal délimitant la zone d'injection du second combustible étant située entre la voûte et un plan horizontal dont la distance au bain de verre est supérieure ou égale à la hauteur minimale de la veine d'air dans le laboratoire de fusion.

En aucun cas, le second combustible est injecté directement dans l'air de combustion chaud.

Conformément au langage choisi pour les paragraphes ci avant, dans l'ensemble du présent texte, le terme « brûleur » désigne exclusivement un moyen pour injecter et brûler le premier combustible alors que le terme « injecteur » désigne exclusivement un moyen pour injecter et brûler le second combustible.

Traditionnellement, et en particulier lorsque l'on pense à des fours existants susceptibles d'être modifiés pour y mettre en oeuvre la présente invention, on pourrait aussi appeler le brûleur « brûleur », et on devrait alors appeler l'injecteur « brûleur auxiliaire ». Toutefois, un tel langage alourdirait le présent texte et serait source d'erreurs.

De même, dans la description du four mis en oeuvre selon l'invention et dans la description d'autres fours dont les brûleurs sont situés sur une même paroi ou qui n'ont qu'un seul brûleur, la paroi avant est celle qui porte le (ou les) brûleur(s), la paroi arrière est la paroi opposée et les parois latérales sont les deux autres parois. Et en cas d'un four à base non rectangulaire, la présente définition s'applique de manière analogue aux sections de paroi correspondantes.

Par ailleurs, toute indication du nombre de brûleurs ou d'injecteurs disposés dans un four de fusion mis en oeuvre selon l'invention est donnée purement à titre d'exemple et ne préjuge en rien sur un mode de réalisation particulier d'un tel four. En effet, le principe de la présente invention est aussi bien valable lorsqu'un four de fusion mis en oeuvre selon l'invention comprend un seul brûleur et un seul injecteur que lorsqu'il en comprend plusieurs et non nécessairement un nombre égal de brûleurs et d'injecteurs.

Selon la présente invention, les brûleurs existant sur un four traditionnel sont maintenus. Ils sont complétés par un ou plusieurs injecteurs permettant d'introduire dans le laboratoire de fusion, dans une ou plusieurs zones éloignées des brûleurs, soit un autre combustible soit une fraction du même combustible que celui introduit par les brûleurs. Cette injection est parfois appelée auxiliaire - par opposition à une injection supplémentaire, par exemple en post-combustion - car son but n'est pas d'augmenter la quantité ou le débit de combustible, mais de mieux distribuer ou repartir la quantité de combustible nécessaire pour la quantité et le type de verre à fondre et pour obtenir ainsi un meilleur transfert de chaleur vers le verre à fondre, tout en réduisant en même temps les émissions de NOx.

Cette disposition de l'invention, qui est d'ailleurs valable aussi bien lorsque le premier et le second combustibles sont de même nature que lorsqu'ils sont de natures différentes, est en outre le fondement du mode de réglage du débit des injecteurs dit « de manière complémentaire » indiqué plus haut.

En effet, le débit du second combustible est varié en fonction du débit du premier combustible de sorte que, lorsque le brûleur n'introduit pas la totalité de combustible nécessaire pour la fusion du verre, le restant est introduit par un (ou plusieurs) injecteur(s) disposé (s) éloigné (s) du brûleur et, le cas échéant, éloignés les uns des autres, dans des régions ou zones du four où le second combustible se mélangera initialement avec les produits de combustion re-circulés, c'est-à-dire venant du ou des brûleurs et étant donc pauvres en oxygène, avant de s'enflammer au contact avec l'air de combustion chaud non consommé par la flamme du (ou des) brûleur(s).

Notons à ce sujet expressément que dans les fours de fusion selon la présente invention, il n'y a pas d'entrée d'air secondaire pour la combustion du second combustible, car il n'y a pas de post-combustion.

Généralement, pour obtenir une réduction de l'émission de NOx, le brûleur fonctionne en excès d'air, c'est-à-dire le brûleur introduit moins de premier combustible que le débit d'air de combustion permettrait. Ceci baisse la température de la flamme du brûleur par rapport à des températures que la flamme aurait sous des conditions stoechiométriques et réduit ainsi l'émission de NOx.

Dans le cas de notre invention, lorsque le premier combustible est brûlé, les produits de combustion remplissent la chambre de combustion et sont donc présents à l'endroit ou à tous les endroits où un injecteur est placé pour introduire le second combustible. Lors de l'introduction du second combustible, celui-ci est d'abord dilué par les produits de combustion du premier combustible et s'enflamme ensuite à l'arrivée de l'air de combustion non consommé par la combustion du premier combustible.

En ce qui concerne la disposition « éloignée » des injecteurs, l'éloignement des zones (de disposition des injecteurs) du ou des brûleurs dépend par exemple des données géométriques du four et donc du temps que les fumées mettront pour arriver à l'injecteur ; l'injecteur doit être suffisamment éloigné du brûleur pour permettre aux fumées d'arriver à l'injecteur et de se mélanger avec le second combustible avant que n'arrive l'air de combustion non consommé de la combustion du premier combustible et enflamme le second combustible.

La disposition d'un ou de plusieurs injecteurs par rapport au(x) brûleur(s) d'un four de fusion de verre selon la présente invention conduit à une combustion progressive du combustible introduit dans ces régions ou zones, produisant une augmentation de la température des fumées dans ces zones riches en combustible ainsi qu'à une augmentation du transfert de chaleur vers le bain de verre.

Le but de l'invention est également atteint avec un procédé de fonctionnement d'un four de fusion de verre comprenant un bassin de fusion pour recevoir le verre à fondre et contenir le bain de verre fondu avec, au dessus du verre, des parois constituant un laboratoire de fusion, au moins une entrée d'air de combustion chaud, au moins une sortie de fumées chaudes, ainsi qu'au moins un brûleur et au moins un injecteur pour injecter respectivement un premier et un second combustibles dans le laboratoire.

Selon ce procédé, on injecte un premier et un second combustibles, de même nature ou non, dans le four moyennant le(s) brûleur(s) et le(s) injecteur(s), le(s) injecteur(s) étant disposé(s) sur une (des) paroi(s) différente(s) de celle sur laquelle est (sont) positionné (s) le (s) brûleur(s) et éloigné(s) du ou des brûleurs, et on règle le (s) brûleur(s) et le(s) injecteur(s) de façon complémentaire afin que la totalité des premiers et seconds combustibles utilisés par le ou les injecteurs (4) et le ou les brûleurs (1) corresponde en grande partie au débit total utilisé normalement sur le four, que le premier et le second combustibles soient de même nature ou de natures différentes.

La fraction du combustible qui est introduite comme second combustible, ou la quantité d'un second combustible différent du premier, est déterminée pour chaque four et peut aller jusqu'à la totalité de la quantité de combustible.

Avec cette technique, selon laquelle le premier combustible est introduit dans le four de fusion avec un excès d'air par rapport au débit d'air de combustion stoechiométrique, comme la fraction de combustible introduite par les injecteurs n'alimente plus le brûleur, la part de combustible brûlé avec un front de flamme à haute température est réduite, générant ainsi moins d'émission de NOx par la voie thermique.

L'air de combustion non utilisé par le brûleur reste disponible pour la combustion du second combustible introduit par l'injecteur.

Il est aussi probable que le combustible introduit dans les zones du four à hautes températures, mais à teneur en oxygène réduite, craquera pour produire des suies augmentant ainsi le transfert de chaleur de ces zones vers le bain de verre.

Les points d'injection potentiels sont situés sur la paroi formant une voûte. Dans certains cas, le centre de la voûte qui, dans le cas des formes traditionnelles rectangulaires des fours de fusion de verre, est une ligne de symétrie transversale ou une ligne de symétrie longitudinale de la voûte par rapport à une direction de référence donnée par la direction de la flamme du brûleur, peut être particulièrement intéressant pour l'injection du second combustible, car en choisissant cet endroit, on peut réduire par deux le nombre d'injecteurs nécessaires pour la réalisation de l'invention.

La sélection des points d'injection, de la direction des jets en sortie d'injecteur et de la vitesse de ces jets est essentielle au succès de cette technique de combustion. Les positions ainsi que la géométrie des injecteurs les plus convenables devront être identifiées pour chaque four de fusion.

La vitesse et la direction d'introduction du second combustible ont une influence sur le résultat obtenu par la mise en oeuvre des différentes dispositions de l'invention. Toutefois, ces deux caractéristiques sont déterminées lors de la conception du dispositif. Une erreur dans la détermination de la position des injecteurs ou de leur géométrie peut non seulement compromettre l'efficacité de la technique de combustion mais peut aussi conduire à une baisse du rendement du four ainsi qu'à une augmentation de la température des régénérateurs réfractaires. Dans les cas extrêmes, un arrêt prématuré du four peut se produire.

Les emplacements des injecteurs et les directions et vitesses d'injection de combustible les plus favorables mais aussi des indications claires quant aux géométries d'injecteurs qui risquent d'être contre- productives sont avantageusement déterminés à l'aide de modèles que l'on obtient par des calculs et des essais. De tels modèles sont basés sur une combinaison de techniques de modélisation physique et mathématique et prennent en compte les contraintes techniques imposées par la construction de chaque four. L'adoption de la configuration de combustion auxiliaire la plus favorable suggérée par la modélisation aboutit à des niveaux d'émissions de NOx bien plus bas que ceux générés par des modes de combustions différents de ceux de l'invention et ce, sans le faire au détriment d'une baisse du rendement du four. Le ratio de combustible auxiliaire est ajusté pour obtenir un compromis entre l'efficacité du four et le niveau des émissions de NOx. En prédisant les températures au sein de l'enceinte, le modèle permet d'ajuster le ratio de combustible auxiliaire afin d'éviter tout point chaud ainsi que tout point froid sur les surfaces internes du four. On veillera particulièrement à éviter :
- la condensation d'alcalins sur la voûte ou sur les parois du four (usure des réfractaires),
- la condensation d'hydrocarbures sur les parois internes du four,
- ainsi que la modification de la nature du verre par ajout de carbone à sa composition.

Ceci est rendu possible par la modélisation, celle- ci permettant le choix d'un emplacement judicieux.

De tels modèles permettent par exemple pour un four de fusion transversal, de déterminer la position d'injection située en voûte et au centre pour un brûleur comme étant l'une des plus favorables à la réduction des émissions de NOx visée, avec un ratio combustible secondaire injecté variable en fonction des limites de niveau d'émissions à atteindre pour ce brûleur. Un avantage important de l'injection symétrique en voûte par rapport à l'injection latérale est l'utilisation des mêmes injecteurs pour le feu à gauche et le feu à droite.

En fonction du niveau global de réduction de NOx à atteindre sur le four, le nombre de brûleurs à équiper d'un injecteur pourra varier.

Concernant les fours à boucle qui présentent deux ports à une extrémité de la chambre de fusion et d'affinage, et deux régénérateurs étanches, chacun communiquant respectivement avec un port, les injections auxiliaires en voûte doivent se faire de préférence, comme les injections sur les parois, dans une zone située entre la voûte et un plan horizontal dont la distance au bain de verre est supérieure ou égale à la hauteur minimale de la veine d'air.

Les injections se feront, symétriquement ou non, de part et d'autre du four. La localisation optimale du ou des points d'injection est réalisée par utilisation d'un modèle, car d'un four à boucle à un autre les re-circulations peuvent être différentes, et cela principalement du fait du ratio largeur/longueur du four.

Par conséquent, il est proposé d'implémenter la technique de combustion auxiliaire développée ici en l'ajoutant à la technique de combustion déjà présente sur le four. Cela se fait en ajustant les écoulements de combustible entre les injecteurs et le brûleur de façon à réaliser un équilibre entre réduction des NOx, nature du verre et efficacité thermique appropriée à chague installation visée.

Un exemple de réalisation d'un four de fusion mis en oeuvre selon l'invention permettant d'obtenir une réduction des NOx avec un maintien, voire une augmentation des transferts thermiques est décrit plus loin.

L'approche de l'invention permet aussi une implémentation progressive de cette nouvelle technique de combustion, réduisant ainsi ou éliminant les risques de perte de production dus à un dommage sur le four. Enfin, cette approche permet à tout instant, à l'exploitant de revenir à sa configuration de combustion initiale.

Bien que développée pour être utilisée sur des fours de fusion de verre régénératifs, la technique de combustion auxiliaire de l'invention est susceptible de pouvoir être utilisée aussi sur d'autres types de four de fusion de verre (par exemple des fours Unit-Melter ou des fours récupérateurs), ainsi que sur des fours autres que les fours de fusion de verre.

Bien qu'il soit prévu que le combustible injecté par voies auxiliaires soit du gaz naturel sur les fours alimentés en gaz naturel ou en fioul, l'utilisation de différents combustibles tel que le biogaz, l'hydrogène, les GPL et le fioul n'est pas exclue.

Ainsi, la présente invention concerne également les caractéristiques suivantes considérées isolément ou selon toute combinaison techniquement possible :
- les injecteurs sont orientés au moins approximativement dans une direction opposée à la direction principale des flammes des brûleurs du four ;
- les injecteurs sont orientés au moins approximativement dans la même direction que les flammes des brûleurs du four ;
- les injecteurs sont orientés au moins approximativement dans une direction perpendiculaire aux flammes des brûleurs du four ;
- les injecteurs sont orientés au moins approximativement dans une direction transversale aux flammes des brûleurs du four ;
- les premier et second combustibles sont de même nature ;
- les premier et second combustibles sont de natures différentes.

Les injecteurs peuvent être équipés d'un système de mise en rotation (swirler) permettant de maîtriser la forme de la flamme indépendamment du débit de combustible secondaire de manière à pouvoir injecter jusqu'à 100 % de la totalité de combustible utilisée par le ou les injecteurs et le ou les brûleurs sans affecter le bain de verre.

Les injecteurs peuvent être équipés d'un dispositif permettant d'ajuster l'impulsion du combustible (double impulsion), indépendamment du débit de combustible secondaire de manière à pouvoir injecter jusqu'à 100 % de la totalité de combustible utilisée par le ou les injecteurs et le ou les brûleurs sans affecter le bain de verre.

Les injecteurs peuvent être de forme non circulaire ou comprendre des multijets afin d'ajuster la forme de la flamme sans affecter le bain de verre.

Dans un four de fusion modifié pour la mise en oeuvre de l'invention, la réduction des oxydes d'azote contenus dans les produits de combustion est obtenue en utilisant la combinaison des brûleurs déjà présents sur le four avec des injections auxiliaires de combustible dans les zones de recirculation des fumées dudit four. Les injections se font suivant un ou plusieurs jets situés dans des emplacement optimaux sur le four définis en utilisant une méthodologie basée sur la simulation numérique pouvant être couplée ou non à la représentation des écoulements par une maquette froide du four. Le plan des injections peut être parallèle, perpendiculaire ou transversal à la surface du bain de verre. L'invention trouve application dans le domaine de la réduction des oxydes d'azote par méthode primaire dans les fours de fusion du verre.

L'invention permet :
- de réduire les émissions de NOx,
- de réduire ou d'éliminer les coûts de post-traitement,
- d'améliorer le rendement du four, et de réduire les émission de NOx tout en améliorant le rendement du four.

En outre, l'invention
- est applicable quelque soit le combustible alimentant le brûleur,
- est applicable avec un combustible alimentant les injecteurs qui est de nature différente de celui alimentant les brûleurs du four, le cas échéant le type d'injecteur est à adapter au combustible choisi,
- est applicable avec un combustible alimentant les injecteurs qui est de même nature que celui alimentant les brûleurs du four, le type d'injecteur pouvant alors correspondre à celui des brûleurs en ce qui concerne leur adaptation au combustible,
- est mise en oeuvre directement dans la chambre de combustion aussi appelée laboratoire de fusion,
- permet la répartition du combustible entre les brûleurs principaux équipant déjà le four et des injecteurs de façon à déterminer la réduction des émissions de NOx combinée à un rendement adéquat pour chaque four particulier,
- peut être utilisée avec des brûleurs under-port, des brûleurs side-port, des brûleurs through-port ou avec tout autre type de brûleur équipant le four à l'origine,
- peut utiliser l'injection par les injecteurs, d'une fraction du combustible injecté par les brûleurs, mais
- peut tout aussi bien utiliser la totalité du combustible par les injecteurs.

L'injection auxiliaire
- n'est pas mise en oeuvre directement dans la veine d'air,
- peut se faire avec le même combustible ou avec un combustible différent de celui injecté par les brûleurs,
- peut se faire avec du gaz naturel,
- peut se faire avec du GPL,
- peut se faire avec du fioul,
- peut se faire avec du gaz de cokerie,
- peut se faire avec du gaz de hauts-fourneaux,
- peut se faire avec du gaz de reformage,
- peut se faire avec du biogaz,
- peut se faire avec de l'hydrogène,
- peut se faire avec tout autre combustible.

D'autres caractéristiques et avantages de la présente invention ressortiront de la description ci- après d'un mode de réalisation d'un four pour la mise en oeuvre del'invention. Cette description est faite en référence aux dessins dans lesquels :
- les figures 1 à 2 représentent deux types de fours de fusion utilisés avant l'invention ;
- la figure 3 représente un four de fusion transversal pour la mise en oeuvre de l'invention en une coupe horizontale indiquant la zone des injections auxiliaires ;
- la figure 4 représente, dans un diagramme, les niveaux de NOx en fonction de la répartition de puissance entre les brûleurs et les injecteurs associés ;
- la figure 5 représente une vue schématique d'un four selon l'invention en une coupe verticale indiquant un exemple de zone d'injections auxiliaires ;
- la figure 6 représente, dans un diagramme, une comparaison des niveaux de NOx et de CO obtenus dans un four avec et sans utilisation de l'invention ;
- la figure 7 représente, dans un diagramme, des niveaux de température obtenus dans un four avec et sans utilisation de l'invention ; et
- la figure 8 représente, dans un diagramme, une comparaison de transferts thermiques obtenus dans un four avec et sans utilisation de l'invention.

Les figures 1 et 2 représentent chacune très schématiquement deux types de fours de fusion de verre traditionnellement utilisés, à savoir, un four régénératif transversal et un four à boucle. Tous les deux types de fours ont une base rectangulaire limitée par quatre parois dont les deux parois s'étendant dans le sens de la longueur du four sont appelées ici les parois latérales et dont les deux autres parois sont appelées les parois transversales. En hauteur, chacun des fours est limité par une voûte.

Dans un four de fusion de verre régénératif transversal (figure 1), les brûleurs 1 sont disposés dans les parois latérales 2 et fonctionnent en alternance sur un côté et puis sur l'autre pendant environ vingt à trente minutes par côté. L'air froid A de combustion est préchauffé dans deux récupérateurs de chaleur R, à savoir en alternance, selon le rythme de fonctionnement des brûleurs, dans celui des deux récupérateurs qui est proche des brûleurs en fonctionnement. Les fumées résultantes F réchauffent ensuite celui des deux récupérateurs R qui est éloigné des brûleurs en fonctionnement.

Et dans un four à boucle de fusion de verre (figure 2), où la longueur du four ne dépasse pas beaucoup la largeur de celui-ci, les brûleurs 1 sont disposés dans une paroi transversale 3. La portée de la flamme de chacun des brûleurs 1 est telle que, sous l'influence de la paroi transversale opposée, l'extrémité de chacune des flammes décrit une boucle. L'air froid de combustion est préchauffé dans une partie d'un régénérateur R à plusieurs chambres avant d'être dirigé comme air de combustion chaud AC vers les brûleurs. Les fumées résultantes sont ensuite dirigées vers l'autre régénérateur pour le réchauffer.

Dans chacun des fours, les flammes sont dirigées approximativement parallèlement à la surface du bain de verre B.

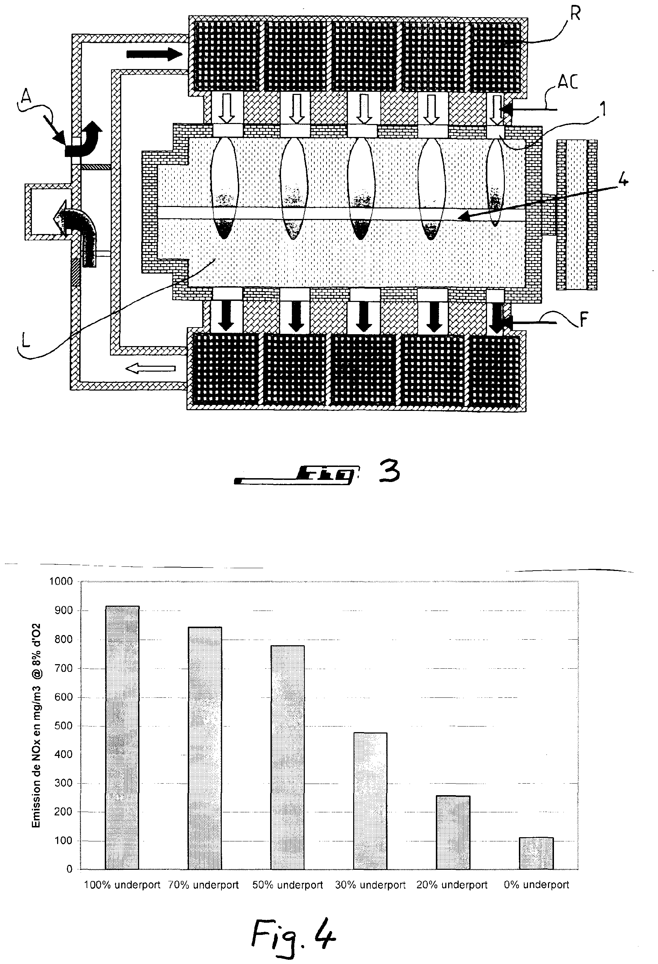

La figure 4 représente, dans un diagramme indiquant le niveau de NOx atteint en fonction de la répartition de puissance entre un brûleur 1 et le ou les injecteurs 4, des résultats obtenus dans un four d'essais (ou une cellule d'essais) semi-industriels. On notera plus particulièrement que le niveau des émissions de NOx décroît avec l'augmentation de la part de combustible injecté au travers des injecteurs secondaires.

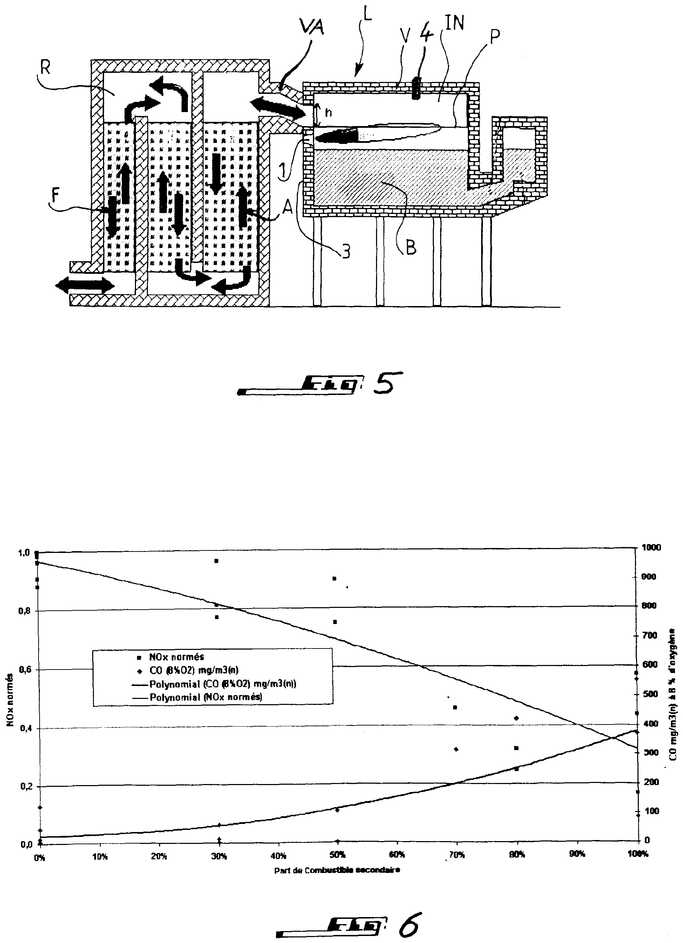

La figure 5 représente encore une fois le four à boucle de la figure 2, mais cette fois-ci avec indication de la zone IN dans laquelle, selon l'invention : les injections secondaires de combustible doivent être effectuées dans un espace défini au-dessus des flammes, c'est-à-dire entre la voûte V et un plan horizontal P dont la distance au bain de verre B est supérieure ou égale à la hauteur minimale de la veine d'air VA, c'est-à-dire dans une zone du laboratoire de fusion qui est éloignée du brûleur et située entre la voûte et un plan horizontal P situé à un niveau supérieur ou égal à un plan horizontal passant par un bord inférieur de l'entrée d'air de combustion chaud.

Les injections auxiliaires se font avantageusement, mais non nécessairement, symétriquement de part et d'autre du four.

Selon un mode de réalisation particulièrement économique en nombre d'injecteurs 4, tel qu'il est représenté schématiquement sur la figure 3, les injecteurs sont disposés dans une zone correspondant au moins approximativement à une zone centrale par rapport aux brûleurs disposés dans les parois latérales du four et fonctionnant par côté en alternance ou simultanément

Sur cette vue, on voit également l'arrivée de l'air froid A de combustion, son passage par les récupérateurs de chaleur R pour être préchauffé avant d'entrer dans le bassin ou laboratoire de fusion L, la sortie des fumées chaudes du laboratoire de fusion et leur passage par les récupérateurs de chaleur avant de sortir du four de fusion. Et l'on voit plus particulièrement un exemple de disposition d'injecteurs. Rappelons que la position précise de chacun des injecteurs est déterminée par une combinaison de calculs selon un modèle et d'essais avec le four spécifique qui doit être équipé de tels injecteurs.

Des essais ont été faits avec un tel four à une puissance unitaire des brûleurs under-port de 1,03 MW avec un angle d'injection au brûleur de 10°, un facteur d'air de 1,1, une température d'air préchauffé de 1000 °C et une température de four de 1500 °C. Les résultats sont représentés sur les figures 4, 6, 7 et 8.

La figure 6 représente, sous la forme d'un diagramme, les niveaux de CO et de NOx à 8% d'oxygène pour différentes répartitions de puissance entre un brûleur et un ou des injecteurs attribués, le ou les injecteurs étant disposés dans la voûte du four.

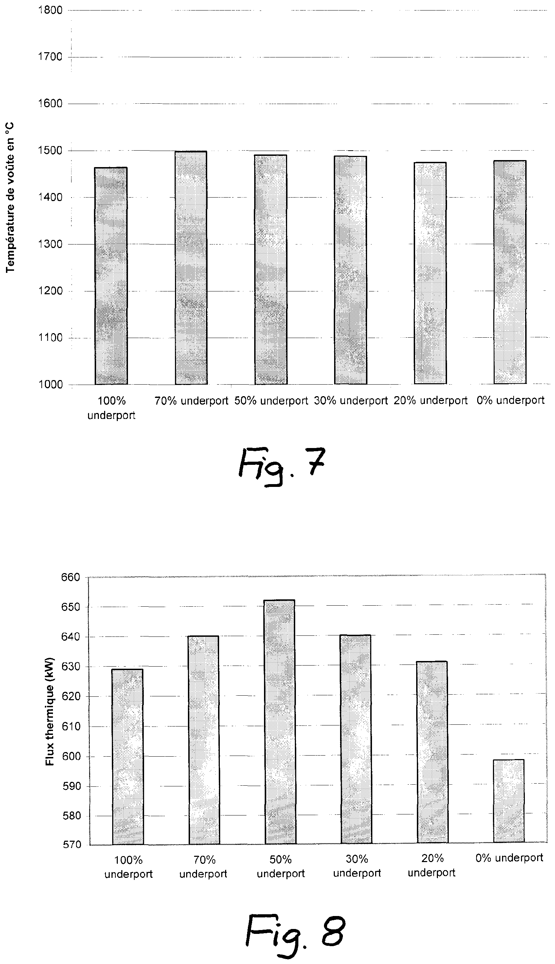

La figure 7 représente, sous la forme d'un diagramme, les niveaux de température de voûte pour différents modes de fonctionnement du four, à savoir pour un brûleur seul et pour un brûleur avec un injecteur qui injecte entre 30% et 100% du combustible. On constate que le procédé ne provoque pas de surchauffe de la voûte.

La figure 8 représente, sous la forme d'un diagramme, les flux thermiques transmis à la charge sans et avec injection secondaire. Dans cet exemple, le flux thermique est le plus élevé pour des injections secondaires comprises entre 30 et 80 % du combustible.

La figure 6 représente, sous la forme d'un diagramme, les niveaux de NOx et de CO d'un four sans et avec une injection auxiliaire allant jusqu'à 100% du combustible. On observe que les niveaux de NOx diminuent lorsque la part de combustible auxiliaire augmente. Les niveaux de CO augmentent quand à eux progressivement avec la part de combustible auxiliaire mais dans des proportions tout à fait tolérables.

Un compromis doit donc être réalisé entre les niveaux de NOx et de CO et le rendement. Dans l'exemple présenté, ce compromis est réalisé avec un débit de combustible compris entre 50 et 70% du débit total.

## Revendications

1. Procédé de combustion pour la fusion de verre selon lequel un premier combustible et un second combustible de même nature ou de natures différentes, sont introduits dans un laboratoire de fusion constitué par une paroi avant, une paroi arrière, des parois latérales et une voûte disposés au-dessus d'un bassin pour recevoir le verre à fondre et contenir le bain de verre fondu, selon lequel on introduit le premier combustible par au moins un brûleur (1) disposé sur une première paroi et injecte le second combustible par un injecteur positionné sur la voûte, prévoit l'introduction d'une veine d'air de combustion pour la combustion des premiers et second combustible de façon que le brûleur soit situé à un endroit près de ou dans la veine d'air de combustion et positionne l'injecteur sur la voûte à une distance du brûleur suffisante dans une zone où le second combustible se mélange avec les fumées chaudes recirculant dans le laboratoire de la combustion du premier combustible, pour qu'il se dilue dans ces fumées, avant de s'enflammer dans le laboratoire au contact avec l'air de combustion non consommé par la combustion du premier combustible, avec transfert de la chaleur produite vers le verre à fondre, tout en réduisant la production de NOx, la quantité du second combustible étant comprise entre 30 % et 100% de la quantité totale de combustible.

2. Procédé de combustion pour la fusion de verre selon la revendication 1, **caractérisé en ce qu'**on dispose le ou les brûleurs sur la paroi avant (3) du four et au moins une partie des injecteurs (4) sur au moins un des axes de symétrie de la voûte (V) du four, le ou les injecteurs (4) étant orientés approximativement dans une direction transversale à celle de la flamme du ou des brûleurs (1) du four.

3. Procédé de combustion pour la fusion de verre selon l'une quelconque des revendications 1 ou 2, **caractérisé en ce que** le (ou les) brûleur (s) (1) et le (ou les) injecteur(s) (4) sont faits pour des premier et second combustibles de même nature.

4. Procédé de combustion pour la fusion de verre selon l'une quelconque des revendications 1 à 2, **caractérisé en ce que** le (ou les) brûleur (s) (1) et le (ou les) injecteur(s) (4) sont faits pour des premier et second combustibles de natures différentes.

5. Procédé de combustion pour la fusion de verre selon l'une quelconque des revendications 1 à 4, **caractérisé en ce que** le (ou les) brûleur (s) (1) et le (ou les) injecteur(s) (4) sont faits pour des premier et second combustibles faisant parties d'un groupe de combustibles comprenant du gaz naturel, du GPL, du fioul, du gaz de cokerie, du gaz de hauts-fourneaux, du gaz de reformage, du biogaz, de l'hydrogène.

6. Procédé de combustion pour la fusion de verre selon les revendications 1 à 5, **caractérisé en ce qu'**on équipe au moins un des injecteurs (4) d'un dispositif de mise en rotation du combustible.

7. Procédé de combustion pour la fusion de verre selon les revendications 1 à 6, **caractérisé en ce qu'**on équipe au moins l'un des injecteurs (4) d'un dispositif permettant d'ajuster l'impulsion du combustible.

## Patentansprüche

1. Verbrennungsverfahren zum Glasschmelzen, gemäß dem ein erster Brennstoff und ein zweiter Brennstoff derselben Art oder unterschiedlicher Arten in eine Schmelzkammer eingeleitet werden, bestehend aus einer vorderen Wand, einer hinteren Wand, Seitenwänden und einem Gewölbe, die über einem Becken für die Aufnahme des zu schmelzenden Glases und zum Enthalten des geschmolzenen Glasbades angeordnet sind, gemäß dem der erste Brennstoff durch mindestens einen Brenner (1) eingeleitet wird, der auf einer ersten Wand angeordnet ist, und der zweite Brennstoff durch einen Injektor eingespritzt wird, der auf dem Gewölbe angeordnet ist, das Einleiten eines Verbrennungsluftstroms für die Verbrennung des ersten und zweiten Brennstoffs derart vorgesehen ist, dass sich der Brenner an einer Stelle in der Nähe oder in dem Verbrennungsluftstrom befindet und der Injektor auf dem Gewölbe in einem ausreichenden Abstand von dem Brenner in einer Zone positioniert wird, wo sich der zweite Brennstoff mit den in der Brennkammer des ersten Brennstoffs rezirkulierenden warmen Rauchgasen mischt, damit er sich in diesen Rauchgasen verdünnt, bevor er sich in der Kammer im Kontakt mit der durch die Verbrennung des ersten Brennstoffs nicht verbrauchten Verbrennungsluft entzündet, mit Übertragung der erzeugten Wärme zu dem zu schmelzenden Glas, bei reduzierter NOx-Produktion, wobei die Menge des zweiten Brennstoffs zwischen 30 % und 100 % der Gesamtbrennstoffmenge liegt.

2. Verbrennungsverfahren zum Glasschmelzen nach Anspruch 1, **dadurch gekennzeichnet, dass** der oder die Brenner auf der vorderen Wand (3) des Ofens und mindestens ein Teil der Injektoren (4) auf mindestens einer der Symmetrieachsen des Gewölbes (V) des Ofens angeordnet werden, wobei der oder die Injektoren (4) ungefähr in einer transversalen Richtung zu der der Flamme des oder der Brenner (1) des Ofens ausgerichtet sind.

3. Verbrennungsverfahren zum Glasschmelzen nach einem der Ansprüche 1 oder 2, **dadurch gekennzeichnet, dass** der (oder die) Brenner (1) und der (oder die) Injektor(en) (4) für einen ersten und zweiten Brennstoff derselben Art gemacht sind.

4. Verbrennungsverfahren zum Glasschmelzen nach einem der Ansprüche 1 bis 2, **dadurch gekennzeichnet, dass** der (oder die) Brenner (1) und der (oder die) Injektor(en) (4) für einen ersten und zweiten Brennstoff unterschiedlicher Arten gemacht sind.

5. Verbrennungsverfahren zum Glasschmelzen nach einem der Ansprüche 1 bis 4, **dadurch gekennzeichnet, dass** der (oder die) Brenner (1) und der (oder die) Injektor(en) (4) für einen ersten und zweiten Brennstoff gemacht sind, die Teil einer Brennstoffgruppe sind, welche Erdgas, LPG, Heizöl, Kokereigas, Hochofengas, Reformatgas, Biogas, Wasserstoff umfasst.

6. Verbrennungsverfahren zum Glasschmelzen nach den Ansprüchen 1 bis 5, **dadurch gekennzeichnet, dass** mindestens einer der Injektoren (4) mit einer Vorrichtung zum Inrotationversetzen des Brennstoffs ausgestattet wird.

7. Verbrennungsverfahren zum Glasschmelzen nach den Ansprüchen 1 bis 6, **dadurch gekennzeichnet, dass** mindestens einer der Injektoren (4) mit einer Vorrichtung ausgestattet wird, die erlaubt, den Impuls des Brennstoffs einzustellen.

## Claims

1. Method of combustion for glass melting wherein a first fuel and a second fuel of the same kind or of a different kind are introduced into a melting laboratory comprising a front wall, a rear wall, lateral walls, and a vault arranged above a basin to receive the glass to be melted and containing a bath of molten glass, wherein the first fuel is introduced via at least one burner (1) disposed on at least a first wall and the second fuel is injected via an injector positioned on the vault, wherein a stream of combustion air is introduced for the combustion of the first and second fuels, and wherein the burner is located at a position near or in the stream of combustion air and the injector is located on the vault at a sufficient distance from the burner in an area where the second fuel mixes with the hot fumes recirculating in the laboratory of the combustion of the first fuel, so that it is diluted with these fumes, before being ignited in the laboratory upon contact with the combustion air not consumed by the combustion of the first fuel, wherein the heat produced is transferred to the glass to be melted, while reducing the production of NOx, and while the amount of the second fuel is between 30% and 100% of the total amount of fuel.

2. Method of combustion for melting glass according to claim 1, **characterized in that** the burner(s) is/are arranged on the front wall (3) of the furnace while at least some of the injectors (4) are arranged on at least one of the axes of symmetry of the vault (V) of the furnace, wherein the injector(s) (4) is/are oriented approximately in a direction transverse to that of the flame of the burner (s) (1) of the furnace.

3. Method of combustion for melting glass according to any one of the claims 1 or 2, **characterized in that** the burner(s) (1) and the injector(s) (4) are designed for first and second fuels of the same kind.

4. Method of combustion for melting glass according to any one of the claims 1 to 2, **characterized in that** the burner(s) (1) and the injector(s) (4) are designed for first and second fuels of a different kind.

5. Method of combustion for melting glass according to any one of the claims 1 to 4, **characterized in that** the burner(s) (1) and the injector(s) (4) are designed for first and second fuels forming part of a group of fuels comprising natural gas, LPG, fuel oil, coke furnace gas, blast furnace gas, reformate gas, biogas, hydrogen.

6. Method of combustion for glass melting according to claims 1 to 5, **characterized in that** at least one of the injectors (4) is equipped with a device for rotating the fuel.

7. Method of combustion for glass melting according to claims 1 to 6, **characterized in that** at least one of the injectors (4) is equipped with a device for adjusting the fuel impulse.
